(19) Europäisches Patentamt / European Patent Office / Office européen des brevets

(11) **EP 3 884 183 B1**

(12) **EUROPÄISCHE PATENTSCHRIFT**

(45) Veröffentlichungstag und Bekanntmachung des Hinweises auf die Patenterteilung:
**26.02.2025   Patentblatt 2025/09**

(21) Anmeldenummer: **19801746.9**

(22) Anmeldetag: **31.10.2019**

(51) Internationale Patentklassifikation (IPC):
*F16H 48/38* (2012.01)    *F16H 48/40* (2012.01)
*F16D 1/06* (2006.01)

(52) Gemeinsame Patentklassifikation (CPC):
**F16H 48/38; F16D 1/068; F16D 1/0858;**
**F16D 1/116; F16H 48/40;** F16D 2001/103;
F16H 2048/382; F16H 2048/385

(86) Internationale Anmeldenummer:
**PCT/EP2019/079789**

(87) Internationale Veröffentlichungsnummer:
**WO 2020/104165 (28.05.2020 Gazette 2020/22)**

(54) **DIFFERENTIALGETRIEBE FÜR EIN KRAFTFAHRZEUG**

DIFFERENTIAL GEAR FOR A MOTOR VEHICLE

DIFFÉRENTIEL POUR UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2018   DE 102018220105**

(43) Veröffentlichungstag der Anmeldung:
**29.09.2021   Patentblatt 2021/39**

(73) Patentinhaber: **Audi AG**
**85045 Ingolstadt (DE)**

(72) Erfinder:
• **HORNUNG, Kurt**
**85080 Gaimersheim (DE)**
• **SCHÄFER, Markus**
**80807 München (DE)**
• **MERZ, Andrej**
**85055 Ingolstadt (DE)**

(74) Vertreter: **Bierschneider, Walter**
**Neubauer - Liebl - Bierschneider - Massinger**
**Münchener Straße 49**
**85051 Ingolstadt (DE)**

(56) Entgegenhaltungen:
WO-A1-2014/086353      DE-A1- 10 030 901
DE-A1- 10 030 901      DE-A1- 102011 080 002
DE-A1- 102011 087 579      DE-A1- 102011 087 579
FR-A1- 2 805 482      FR-A1- 2 805 482
US-A1- 2005 090 358      US-A1- 2012 329 599
US-A1- 2012 329 599      US-A1- 2016 377 161
US-A1- 2017 219 077

EP 3 884 183 B1

**Beschreibung**

Die Erfindung betrifft ein Differentialgetriebe für ein Kraftfahrzeug gemäß der im Oberbegriff des Patentanspruches 1 angegebenen Art.

Differentialgetriebe sowie unterschiedliche Konzepte zur Lagerung des Achsabtriebsrads am Differentialgehäuse sind aus dem Stand der Technik hinreichend bekannt. Lediglich beispielhaft wird auf die EP 2 740 562 B1, DE 10 2017 006 417 A1 und DE 10 2016 218 087 A1 verwiesen. Insbesondere die über die Verzahnung des Achsabtriebsrads eingebrachten Axialkräfte können zu einem "Verkippen" und damit zu einer Verlagerung der Verzahnung führen, was wiederum einen ungünstigeren Zahnkontakt und damit eine ungleichmäßige Bewegungsübertragung (Drehzahl, Drehmoment) bedingt. Die ungleichmäßige Bewegungsübertragung hat akustische Auffälligkeiten zur Folge, was wiederum Anlass für Fahrzeugbeanstandungen sein kann. Insbesondere in Hinblick auf neue, einen Elektroantrieb aufweisende Fahrzeugkonzepte, gewinnen diese akustischen Beanstandungen immer mehr an Gewichtung.

Die DE 10 2011 087 579 A1 offenbart ein Stirnraddifferenzial für einen Antriebsstrang eines Kraftfahrzeuges, mit einem Planetenträger, in dem zwei je eine Außenverzahnung aufweisende Sonnenräder angeordnet sind, die mit je einem als Planetenrad ausgebildeten Ausgleichsrad kämmen, wobei die beiden Planetenräder miteinander in Formschluss befindlich sind, und ferner ein mit einem im Wesentlichen radial außerhalb des Planetenträgers angeordnetes Achsantriebsrad vorhanden ist. Zwischen einer Innenfläche des Achsantriebsrades und einer radialen Umfangsfläche des Planetenträgers ist eine drehmomentübertragende Verbindung vorhanden, die als stoff- und/oder form- und/oder kraftschlüssige Verbindung und/oder als Pressverband und/oder als verstemmter Verband und/oder als Schweißverbindung ausgestaltet ist.

Aus der US 2017 / 0 219 077 A1 ist ein gattungsgemäßes Differential für ein Kraftfahrzeug mit den Merkmalen des Oberbegriffs des Anspruchs 1 bekannt.

Der Erfindung liegt die Aufgabe zugrunde ein Differentialgetriebe gemäß der im Oberbegriff des Patentanspruches 1 angegebenen Art derart weiterzubilden, dass die unerwünschte Verlagerung der Verzahnung verhindert und damit die Gefahr des Auftretens von akustischen Auffälligkeiten im Betrieb verringert wird.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst das Differentialgetriebe ein drehbar gelagertes Differentialgehäuse sowie ein drehfest auf dem Differentialgehäuse gelagertes, eine Außenverzahnung aufweisendes Achsabtriebsrad, das seinerseits über seine Außenverzahnung mit einer zugeordneten Antriebswelle kämmt und angetrieben wird.

Zudem weist das Differentialgehäuse an seiner äußeren Umfangsfläche zwei Passflächen und das Achsabtriebsrad an seiner inneren Umfangsfläche zwei entsprechende, radial gegenüberliegende Passflächen auf. Lediglich der Vollständigkeit halber sei darauf hingewiesen, dass die am Differentialgehäuse und die am Achsabtriebsrad ausgebildeten Passflächen als umlaufende Passflächen ausgebildet sind. Die an der äußeren Umfangsfläche des Differentialgehäuses und die an der inneren Umfangsfläche des Achsabtriebsrads ausgebildeten Passflächen sind dabei jeweils als in axialer Richtung betrachtet separate, in einem Abstand A geometrisch voneinander getrennt angeordnete Passflächen ausgebildet und das Achsabtriebsrad ist auf das Differentialgehäuse aufgepresst, so dass das Achsabtriebsrad und das Differentialgehäuse mittels einer ersten Presspassung und einer davon separaten, im Abstand A axial beabstandeten zweiten Presspassung miteinander verbunden sind.

Aufgrund der beiden separaten, im Abstand A axial beabstandeten Presspassungen ist eine äußerst kippsteife Lagerung zur Verfügung gestellt. Hierdurch ist gewährleistet, dass sämtliche aus der Verzahnung resultierenden Kräfte mittels der kippsteifen Lagerung aufgenommen werden können. Die Kippneigung ist dadurch deutlich reduziert, mit der Konsequenz, dass ein optimaler Zahnkontakt und damit eine gleichmäßige, keine unerwünschten Störgeräusche verursachende Bewegungsübertragung sichergestellt ist.

Erfindungsgemäß sind dabei in axialer Richtung betrachtet sowohl die an der äußeren Umfangsfläche des Differentialgehäuses ausgebildeten Passflächen als auch die an der inneren Umfangsfläche des Achsabtriebsrads ausgebildeten Passflächen jeweils durch eine in die jeweilige Umfangsfläche eingebrachte, umlaufende Nut voneinander getrennt, wobei die Nuten in axialer Richtung betrachtet jeweils eine dem Abstand A entsprechende Länge aufweisen. Durch die Nut ist eine einfach herzustellende, wirksame geometrische Trennung der Passflächen und damit der Presspassung sichergestellt. Ein weiterer Vorteil ist, dass der durch die Nut bedingte Materialabtrag sich positiv auf das Bauteilgewicht auswirkt, so dass eine besonders gewichtsoptimierte Konstruktion ermöglicht ist. Durch eine entsprechende Dimensionierung der Nuttiefe kann auf einfache Art und Weise Einfluss auf den Materialabtrag und damit auf die Gewichtseinsparung genommen werden.

Bevorzugt weisen dabei die Nuten eine rechteckige, dreiecksförmige oder halbrunde Grundform auf.

Um eine ausreichend kippsteife Lagerung gewährleisten zu können, sollte der Abstand A zwischen den Passflächen möglichst groß sein. Erste Versuche haben gezeigt, dass der gewünschte Effekt, nämlich die kippsteife Lagerung gewährleistet ist, wenn

$$0{,}5 \le A/L \le 0{,}7,$$

wobei mit L die in axialer Richtung betrachtete axiale Länge der inneren Umfangsfläche des Achsabtriebsrads bezeichnet ist.

Das erfindungsgemäße Differentialgetriebe zeichnet sich dadurch aus, dass die beiden Presspassungen eine geringe radiale Überdeckung von 10 bis 50μm aufweisen und dass zwischen dem Achsabtriebsrad und Differentialgehäuse eine zusätzliche formschlüssige Verbindung ausgebildet ist. Vorteilhaft daran ist, dass aufgrund der relativ geringen radialen Überdeckung die beiden Bauteile einfach zu fügen sind und zudem - aufgrund der zusätzlichen form schlüssigen Verbindung - eine hohe Drehmomentübertragung sichergestellt ist.

Erfindungsgemäß ist die zusätzliche Verbindung in Form einer Polygon- oder Passverzahnung ausgebildet, wobei zwischen Achsabtriebsrad und Differentialgehäuse ein eine Relativbewegung in axiale Richtung verhinderndes Sicherungselement angeordnet ist. Vorteilhaft an dieser Ausgestaltung ist, dass diese aufgrund der formschlüssigen Verbindung ein im Vergleich zu einer stoffschlüssigen Verbindung geringes Bauteilgewicht aufweist.

Vorzugsweise ist dabei das Sicherungselement in Form eines Sicherungsrings, insbesondere in Form eines keilförmigen Sicherungsrings, ausgebildet.

Vorzugsweise ist das Differentialgehäuse aus Gusseisen und das Achsabtriebsrad aus einem härtbaren Werkstoff hergestellt.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

Fig. 1 eine Schnittdarstellung einer erfindungsgemäßen Ausführungsform eines erfindungsgemäßen Differentialgetriebes;

Fig. 2 das Differentialgetriebe aus Fig. 1 in der Draufsicht;

Fig. 3 eine nicht von der Erfindung umfasste erste Vergleichsform in Schnittdarstellung;

Fig. 4 das Differentialgetriebe aus Fig. 3 in der Draufsicht;

Fig. 5 eine Schnittdarstellung einer nicht von der Erfindung umfassten zweiten Vergleichsform, und

Fig. 6 das Differentialgetriebe aus Fig. 5 in der Draufsicht.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

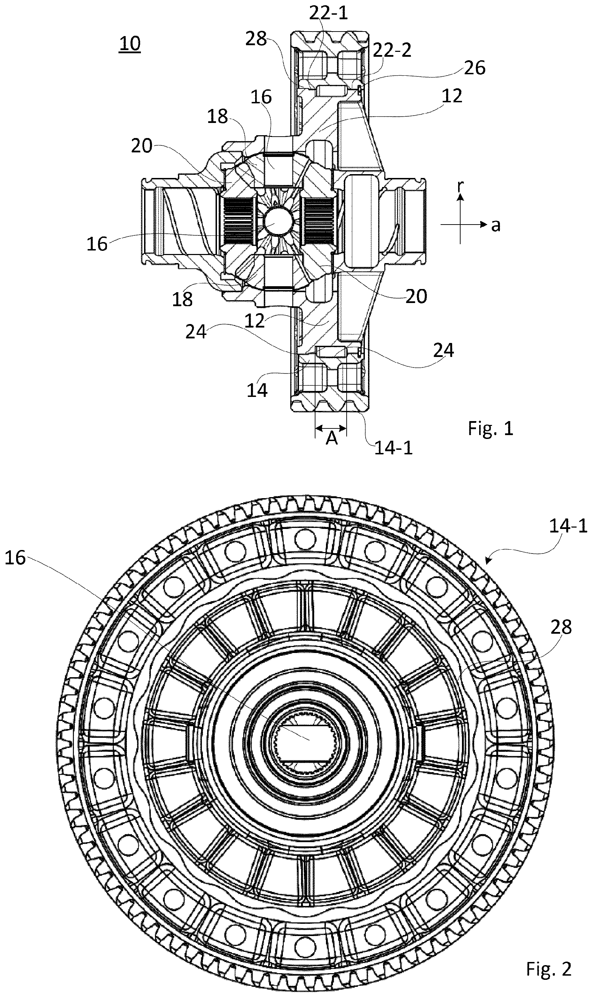

Fig. 1 und 2 zeigen eine erfindungsgemäße Ausführungsform eines insgesamt mit der Bezugsziffer 10 bezeichneten Differentialgetriebes eines Kraftfahrzeugs.

Das Differentialgetriebe 10 umfasst ein Differentialgehäuse 12 und ein mit dem Differentialgehäuse 12 drehfest verbundenes Achsabtriebsrad 14. Das Achsabtriebsrad 14 steht über seine Außenverzahnung 14-1 mit einer - hier aus Gründen der Übersichtlichkeit - nicht dargestellten Antriebswelle in Wirkverbindung.

Über einen kreuzförmigen Mitnahmebolzen 16 treibt das Differentialgehäuse 12 vier Planentenräder 18 an, die wiederum mit zwei Abtriebsrädern 20 kämmen, welche mit - hier aus Gründen der Übersichtlichkeit nicht dargestellten - Radwellenachsen drehfest verbindbar sind.

Wie Fig. 1 und 2 zu entnehmen ist, weist das Differentialgehäuse 12 an seiner äußeren Umfangsfläche zwei Passflächen und das Achsabtriebsrad 14 an seiner inneren Umfangsfläche zwei radial gegenüberliegende Passflächen auf, die jeweils als in axialer Richtung a betrachtet separate, in einem Abstand A geometrisch voneinander getrennt angeordnete Passflächen ausgebildet sind, so dass das auf das Differentialgehäuse 12 aufgepresste Achsabtriebsrad 14 mittels einer ersten Presspassung 22-1 und einer davon separaten, im Abstand A axial beabstandeten zweiten Presspassung 22-2 miteinander verbunden ist.

Um eine für die kippsteife Lagerung ausreichenden Beabstandung zwischen den Presspassungen 22-1 und 22-2 zu gewährleisten, ist der Abstand A so zu wählen, dass gilt:

$$0,5 \leq A/L \leq 0,7,$$

wobei mit L die in axiale Richtung a betrachtete axiale Länge der inneren Umfangsfläche des Achsabtriebsrads 14 bezeichnet ist.

Zur geometrischen Trennung der Passflächen und damit der ersten und zweiten Presspassung 22-1, 22-2 ist - wie Fig. 1 weiter zu entnehmen ist - in die Umfangsfläche des Differentialgehäuses 12 und in die Umfangsfläche des Achsabtriebrads 14 jeweils eine Nut 24 eingefräst. Neben der geometrischen Trennung, ist durch die Nuten 24 in besonders vorteilhafter Weise insbesondere auch eine Gewichtsreduzierung bedingt.

Vorliegend weisen die eingebrachten Nuten 24 jeweils eine im Wesentlichen reckteckförmige Grundform auf.

Aufgrund der in axialer Richtung a beabstandeten Anordnung der beiden Presspassungen 22-1, 22-2 ist eine äußerst kippsteife Lagerung zur Verfügung gestellt, die sämtliche aus der Kämmung der Außenverzahnung 14-1 des Achsabtriebsrads 14 mit einer - hier nicht dargestellten Antriebswelle - resultierenden Axialkräfte aufnehmen kann, so dass ein optimaler Zahnkontakt und damit eine gleichmäßige, keine unerwünschte Störgeräusche verursachende Bewegungsübertragung sichergestellt ist.

Gemäß der in Fig. 1 und Fig. 2 dargestellten Ausführungsform weisen die beiden Presspassungen 22-1 und 22-2 eine radiale Überdeckung von 10 bis 50μm auf. Zur Gewährleistung der Drehmomentübertragung ist zudem zwischen Achsabtriebsrad 14 und Differentialgehäuse 12 im Bereich der ersten Presspassung 22-1 eine zusätzliche formschlüssige Verbindung ausgebildet. Die axiale Sicherung ist über einen Sicherungsring 26 gewährleistet.

Wie insbesondere aus Fig. 2 ersichtlich, ist dabei vorliegend die formschlüssige Verbindung in Form einer Polygonverzahnung 28 ausgebildet.

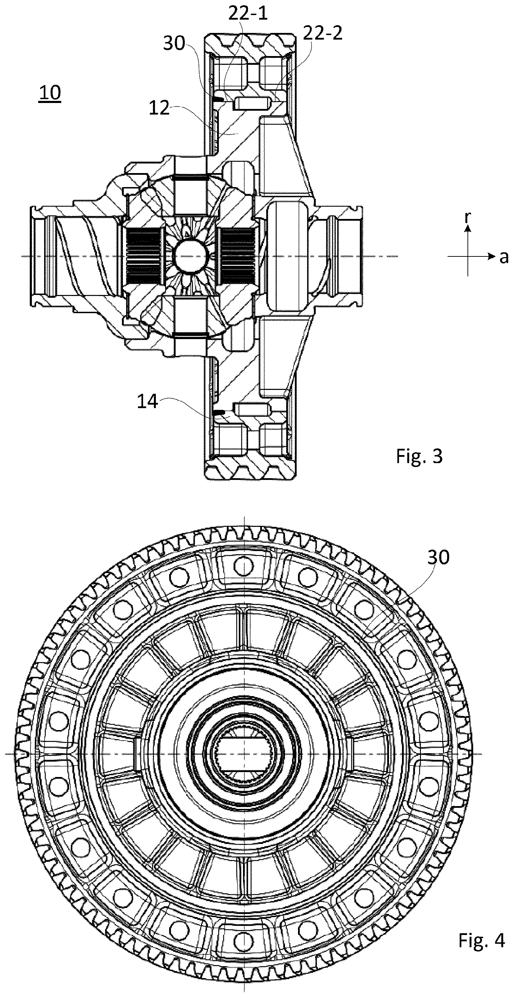

Die in Fig. 3 und 4 dargestellte nicht von der Erfindung umfasste erste Vergleichsform entspricht im Wesentlichen der in Fig. 1 und 2 dargestellten erfindungsgemäßen Ausführungsform. Gegenüber der erfindungsgemäßen Ausführungsform unterscheidet sich diese Vergleichsform dadurch, dass die zusätzliche, der Drehmomentübertragung dienende Verbindung zwischen Achsabtriebsrad 14 und Differentialgehäuse 12 in Form einer Schweißverbindung 30 ausgebildet ist. Dabei ist - wie insbesondere Fig. 3 und 4 zeigen - die Schweißverbindung 30 als eine einseitige, lediglich im Bereich der ersten Presspassung 22-1 angeordnete umlaufende Schweißnahtlage ausgebildet. Neben der Drehmomentübertragung ist durch die Schweißnaht auch eine axiale Fixierung sichergestellt.

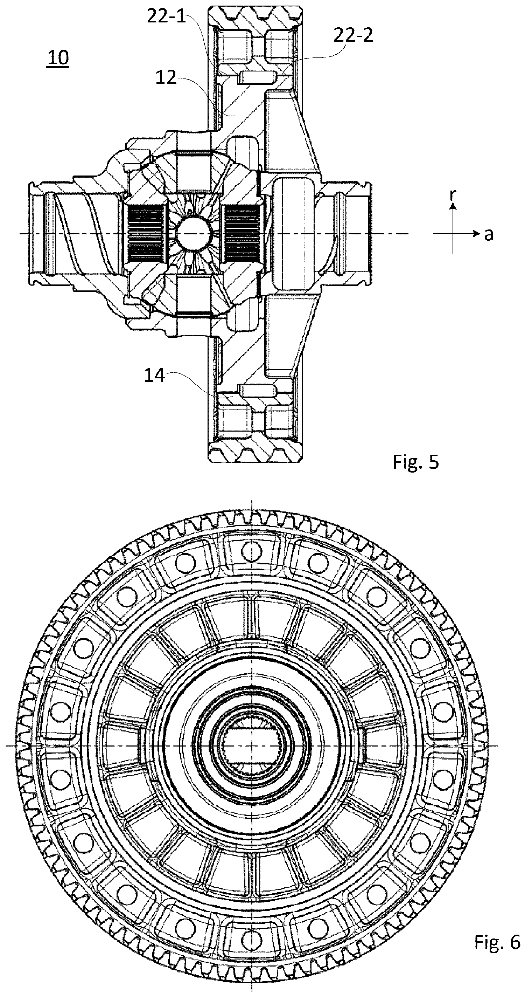

Die in Fig. 5 und 6 dargestellte nicht von der Erfindung umfasste Vergleichsform zeichnet sich gegenüber der erfindungsgemäßen Ausführungsform dadurch aus, dass für die Drehmomentübertragung anstelle einer formschlüssigen Verbindung nunmehr ausschließlich eine kraftschlüssige Verbindung vorgesehen ist. Um eine ausreichende Drehmomentübertragung sicherzustellen, weisen hierbei die beiden Presspassungen 22-1, 22-2 eine radiale Überdeckung von >200μm auf.

**Patentansprüche**

1. Differentialgetriebe (10), umfassend ein drehbar gelagertes Differentialgehäuse (12) und ein drehfest mit dem Differentialgehäuse (12) gelagertes Achsabtriebsrad (14), wobei

das Differentialgehäuse (12) an seiner äußeren Umfangsfläche zwei Passflächen und das Achsabtriebsrad (14) an seiner inneren Umfangsfläche zwei radial gegenüberliegende Passflächen aufweist, wobei die an der äußeren Umfangsfläche des Differentialgehäuses (12) und die an der inneren Umfangsfläche des Achsabtriebsrads (14) ausgebildeten Passflächen jeweils als in axialer Richtung (a) betrachtet separate, in einem Abstand (A) geometrisch voneinander getrennt angeordnete Passflächen ausgebildet sind, und dass das Achsabtriebsrad (14) auf das Differentialgehäuse (12) aufgepresst ist, so dass das Achsabtriebsrad (14) und das Differentialgehäuse (12) mittels einer ersten Presspassung (22-1) und einer davon separaten, im Abstand (A) axial beabstandeten zweiten Presspassung (22-2) miteinander verbunden sind,
**dadurch gekennzeichnet, dass**
die an der äußeren Umfangsfläche des Differentialgehäuses (12) ausgebildeten Passflächen und die an der inneren Umfangsfläche des Achsabtriebsrads (14) ausgebildeten Passflächen in axialer Richtung (a) jeweils durch eine in die jeweilige Umfangsfläche eingebrachte umlaufende Nut (24) voneinander getrennt sind, wobei die Nuten (24) in axialer Richtung (a) betrachtet jeweils eine dem Abstand (A) entsprechende Länge aufweisen, dass die beiden Presspassungen (22-1, 22-2) eine radiale Überdeckung von 10 bis 50μm aufweisen dass zwischen Achsabtriebsrad (14) und Differentialgehäuse (12) eine zusätzliche formschlüssige Verbindung ausgebildet ist, und dass die zusätzliche Verbindung in Form einer Polygon- oder Passverzahnung (28) ausgebildet ist, und dass zwischen Achsabtriebsrad (14) und Differentialgehäuse (12) ein eine Relativbewegung in axiale Richtung (a) verhinderndes Sicherungselement (26) angeordnet ist.

2. Differentialgetriebe (10) nach Anspruch 1,
**dadurch gekennzeichnet, dass**
die Nuten (24) eine rechteckige, dreiecksförmige oder halbrunde Grundform aufweisen.

3. Differentialgetriebe (10) nach einem der Ansprüche 1 oder 2,
**dadurch gekennzeichnet, dass**
in axialer Richtung (a) betrachtet die innere Umfangsfläche des Achsabtriebsrads (14) eine Länge (L) aufweist, und dass bezogen auf die Länge (L) der inneren Umfangsfläche für den Abstand (A) zwischen den Passflächen gilt:

$$0{,}5 \leq A/L \leq 0{,}7.$$

4. Differentialgetriebe (10) nach einem der vorhergehenden Ansprüche,
**dadurch gekennzeichnet, dass**
das Sicherungselement (26) in Form eines Sicherungsrings ausgebildet ist.

5. Differentialgetriebe (10) nach einem der vorgenannten Ansprüche,
**dadurch gekennzeichnet, dass**
das Differentialgehäuse (12) aus Gusseisen und das Achsabtriebsrad (14) aus einem härtbaren Werkstoff ausgebildet ist.

**Claims**

1. Differential gear (10), comprising a rotatably mounted differential housing (12) and a final drive gear (14) mounted for conjoint rotation with the differential housing (12), wherein

   the differential housing (12) has two mating surfaces on its outer circumferential surface and the final drive gear (14) has two radially opposite mating surfaces on its inner circumferential surface, wherein the mating surfaces formed on the outer circumferential surface of the differential housing (12) and the mating surfaces formed on the inner circumferential surface of the final drive gear (14) are each designed as mating surfaces which are separate, as viewed in the axial direction (a), and are geometrically separated from one another at a distance (A), and wherein the final drive gear (14) is pressed onto the differential housing (12) such that the final drive gear (14) and the differential housing (12) are connected to each other by means of a first press fit (22-1) and a second press fit (22-2) which is separate therefrom and axially spaced at a distance (A),
   **characterized in that**
   the mating surfaces formed on the outer circumferential surface of the differential housing (12) and the mating surfaces formed on the inner circumferential surface of the final drive gear (14) are separated from each other in the axial direction (a) in each case by a circumferential groove (24) introduced into the respective circumferential surface, wherein the grooves (24), as viewed in the axial direction (a), each have a length corresponding to the distance (A), **in that** the two press fits (22-1, 22-2) have a radial overlap of 10 to 50 μm, **in that** an additional formfitting connection is formed between the final drive gear (14) and the differential housing (12), and **in that** the additional connection is in the form of a polygonal toothing or mating toothing (28), and **in that** a securing element (26) preventing a relative movement in the axial direction (a) is arranged between the final drive gear (14) and the differential housing (12).

2. Differential gear (10) according to Claim 1,
   **characterized in that**
   the grooves (24) have a rectangular, triangular or semi-circular basic shape.

3. Differential gear (10) according to either of Claims 1 and 2,
   **characterized in that**,
   as viewed in the axial direction (a), the inner circumferential surface of the final drive gear (14) has a length (L), and **in that**, in relation to the length (L) of the inner circumferential surface, the following applies for the distance (A) between the mating surfaces:

$$0.5 \leq A/L \leq 0.7.$$

4. Differential gear (10) according to any one of the preceding claims, **characterized in that**
   the securing element (26) is formed in the form of a securing ring.

5. Differential gear (10) according to any one of the preceding claims, **characterized in that**
   the differential housing (12) is made of cast iron and the final drive gear (14) is made of a curable material.

**Revendications**

1. Différentiel (10) comprenant un boîtier de différentiel (12) monté rotatif et une roue motrice (14) d'essieu montée fixe en rotation avec le boîtier de différentiel (12), dans lequel

   le boîtier de différentiel (12) présente deux surfaces d'ajustement sur sa surface périphérique extérieure et la roue motrice (14) d'essieu présente deux surfaces d'ajustement radialement opposées sur sa surface périphérique intérieure, les surfaces d'ajustement formées sur la surface périphérique extérieure du boîtier de différentiel (12) et les surfaces d'ajustement formées sur la surface périphérique intérieure de la roue motrice (14) d'essieu étant chacune considérées comme séparées dans la direction axiale (a), étant formées par des surfaces d'ajustement agencées de façon géométriquement séparées les unes des autres d'une distance (A), et en ce que la roue motrice (14) d'essieu est pressée sur le boîtier de différentiel (12), de sorte que la roue motrice (14) d'essieu et le boîtier de différentiel (12) sont reliés l'un à l'autre au moyen d'un premier ajustement serré (22-1) et d'un deuxième ajustement serré (22-2) séparé de celui-ci et espacé axialement de la distance (A),
   **caractérisé en ce que**
   les surfaces d'ajustement formées sur la surface périphérique extérieure du boîtier de différentiel (12) et les surfaces d'ajustement formées sur la surface périphérique intérieure de la roue motrice (14) d'essieu sont séparées les unes des autres dans la direction axiale (a) respectivement par une rainure périphérique (24) pratiquée dans la surface périphérique respective, les rainures (24), vues dans la direction axiale (a), présentant chacune une longueur correspondant à la distance (A), de sorte que les deux ajustements serrés (22-1, 22-2) présentent un recouvrement radial de 10 à 50μm, qu'une liaison supplémentaire par complémentarité de forme est réalisée entre la roue motrice (14) d'essieu et le boîtier de différentiel (12), et que la liaison supplémentaire est réalisée sous la forme d'une denture polygonale ou ajustée (28), et **en ce qu'**un élément de sécurité (26) empêchant un mouvement relatif dans la direction axiale (a) est agencé entre la roue motrice (14) d'essieu et le boîtier de différentiel (12).

2. Différentiel (10) selon la revendication 1, **caractérisé en ce que** les rainures (24) présentent une forme de base rectangulaire, triangulaire ou semi-circulaire.

3. Différentiel (10) selon l'une des revendications 1 ou 2, **caractérisé en ce que** vu dans la direction axiale (a), la surface périphérique intérieure de la roue motrice (14) d'essieu présente une longueur (L), et **en ce que**, par rapport à la longueur (L) de la surface périphérique intérieure, ce qui suit s'applique à la distance (A) entre les surfaces d'ajustement :

$$0{,}5 \leq A/L \leq 0{,}7.$$

4. Différentiel (10) selon l'une des revendications précédentes, **caractérisé en ce que** l'élément de sécurité (26) se présente sous la forme d'un circlip.

5. Différentiel (10) selon l'une des revendications précédentes, **caractérisé en ce que** le boîtier de différentiel (12) est réalisé en fonte et la roue motrice (14) d'essieu est réalisée en un matériau durcissable.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2740562 B1
- DE 102017006417 A1
- DE 102016218087 A1
- DE 102011087579 A1
- US 20170219077 A1